# FASCICULE DE BREVET EUROPEEN

(11) **EP 0 441 707 B1**
(45) Date de publication et mention de la délivrance du brevet: **19.06.1996**
(21) Numéro de dépôt: 91400290.2
(22) Date de dépôt: 07.02.1991
(51) Int. Cl.: G06F 13/38, G06F 13/40

(54) **Coupleur de bus série**
Koppler für Serienbus
Serial bus coupler

(30) Priorité: 08.02.1990 FR 9001480
(43) Date de publication de la demande: 14.08.1991
(73) Titulaire: AEROSPATIALE Société Nationale Industrielle, F-75781 Paris Cédex 16 (FR)
(72) Inventeur: Bauduin,Raphael, F-13700 Marignane (FR); Bedel,Philippe, F-75013 Paris (FR)
(74) Mandataire: Joly, Jean-Jacques

(56) Documents cités:
- DE-A- 3 114 734
- PATENT ABSTRACTS OF JAPAN, vol. 13, no. 422 (P-933), 20 septembre 1989; & JP-A-1 155 230
- PATENT ABSTRACTS OF JAPAN, vol. 1, no. 416 (P-1031), 30 mars 1990; & JP-A-2 023 481

## Description

La présente invention concerne un coupleur de bus série, comme revendiqué dans le préambule de la revendication 1.

Un tel coupleur est connu du document DE-A-3 114 734.

Les échanges entre un système de traitement d'information et des abonnés reliés à ce système par un ou plusieurs bus série absorbent une partie de la puissance de calcul de l'unité centrale du système et de la capacité du bus interne de celle-ci.

Or, il est souvent demandé à un système de traitement d'information de pouvoir effectuer en temps réel des traitements demandant une grande puissance de calcul et une grande disponibilité du bus interne du système. Il en est ainsi par exemple dans des applications telles que le guidage automatique de mobiles, la conduite de procédés ou la robotique.

DE-A-3 114 734 divulgue un coupleur de bus destiné à relier au moins un bus série (10,13) à un système de traitement d'information (1,2). Plus particulièrement, ce coupleur comporte :
. un processeur particulier (6) avec ses bus de données, d'adresses et de contrôle (5),
. un circuit de mémoire associé au processeur et comprenant une mémoire morte de programmes (7),
. au moins un circuit d'interface (8,9,11,12) avec un bus série aboutissant au coupleur, et
. une mémoire d'échange à double accès (3) reliée respectivement au bus du processeur particulier et à celui du système de traitement.

La présente invention se distingue de cet art antérieur principalement par le fait qu'elle comporte en sus d'une part une mémoire vive (14) et d'autre part et une mémoire non volatile (14') dans laquelle sont enregistrées des données relatives au format de trames dans lequel peuvent être transmises ces différentes données.

Par cette structure spécifique, ce coupleur de l'invention peut effectuer des traitements d'informations en temps réel en grande quantité tout en assurant des liaisons avec des circuits externes, ces différentes interventions devant être réalisées avec une sécurité maximum, c'est-à-dire sans perte de données. De plus, ce coupleur doit pouvoir résoudre les problèmes posés par le transfert de données complexes présentes sous forme de trames et susceptibles de fréquentes modifications.

La mémoire vive de la présente invention réalise une fonction de sauvegarde. De plus, avec l'invention, on peut modifier, en fonction des besoins, l'organisation des données émises. La présence d'une mémoire non volatile supplémentaire, dans laquelle sont enregistrées des formats de trame sélectionnables à partir du processeur spécialisé, permet cette modification.

L'invention sera mieux comprise à la lecture de la description, faite ci-après à titre indicatif mais non limitatif, en référence aux dessins annexés sur lesquels :
- la figure 1 est une vue générale d'un système informatique relié à des bus série par l'intermédiaire d'un coupleur conforme à l'invention.
- la figure 2 est une vue plus détaillée d'un mode de réalisation d'un circuit logique faisant partie du coupleur de la figure 1,
- la figure 3 est une vue plus détaillée d'un mode de réalisation d'un circuit de ligne série faisant partie du circuit logique de la figure 2 ;
- la figure 4 est une vue plus détaillée d'un autre mode de réalisation d'un circuit de ligne série faisant partie du circuit logique de la figure 2 ; et
- la figure 5 est une vue générale montrant une variante de réalisation du coupleur de la figure 1.

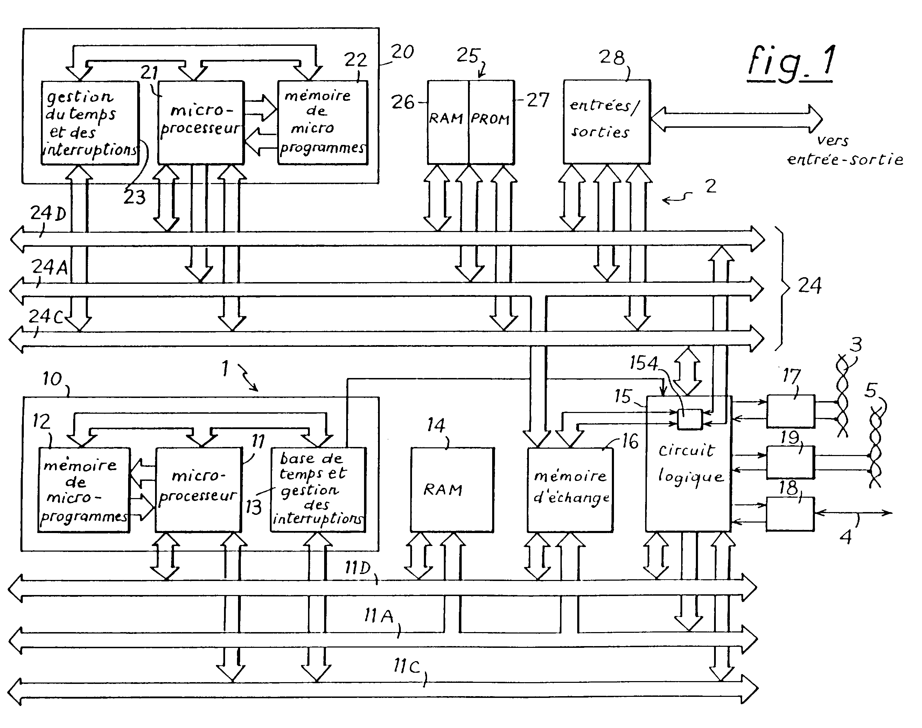

Le coupleur 1 illustré par la figure 1 relie un système de traitement d'information, tel qu'un calculateur 2, à des bus série 3, 4, 5. Bien entendu, le nombre de bus série reliés au calculateur par le coupleur pourrait être différent de trois.

De façon classique, le calculateur 2 comprend une unité centrale 20, des circuits de mémoire 25 associés à l'unité centrale et des circuits d'entrées/sorties 28 permettant le raccordement éventuel du calculateur à des terminaux d'entrée-sortie.

L'unité centrale 20 est organisée autour d'un microprocesseur 21. Celui-ci est par exemple du type microprogrammable. L'unité centrale 20 comprend alors en outre une mémoire de microprogrammes 22 et un circuit 23 de gestion du temps et des interruptions. L'unité centrale 20 a en charge la gestion des tâches accomplies par le calculateur et la gestion des informations d'entrée/sortie en provenance et vers les bus 3, 4, 5 et autres liaisons externes éventuelles.

Le processeur 21 et le circuit 23 sont connectés à un bus 24 qui comprend un bus de données 24D, un bus d'adresses 24A et un bus de contrôle 24C.

Le circuit 23 a pour fonctions la génération de signaux d'horloge de base du calculateur, la génération des signaux d'horloge temps réel, la gestion des interruptions et des tâches et l'arbitrage de l'accès au bus interne 24 du calculateur.

La structure de l'unité centrale 20 est donc tout à fait classique, de sorte qu'une description plus détaillée n'est pas ici nécessaire.

Les circuits de mémoire 25 comprennent une mémoire vive (RAM) 26 et une mémoire d'application 27 de type PROM. Cette dernière contient les programmes d'application mis en oeuvre par l'unité centrale 20.

Le coupleur 1 est organisé autour d'un processeur 10, par exemple de type microprogrammable, ayant un bus de données 11D, un bus d'adresses 11A et un bus de contrôle 11C. Le processeur 10 fait fonction d'automate arithmétique et logique microprogrammé recevant des instructions d'une mémoire de microprogrammes 12. Les procédures de communication sur les bus 3, 4, 5 et les procédures d'échange avec le calculateur 2 sont contenues dans la mémoire 12.

Le coupleur 1 comprend encore une mémoire vive (RAM) 14, un circuit logique 15 et des circuits 17, 18, 19 formant circuits d'interface entre le circuit logique 15 et les bus 3, 4, 5.

La mémoire vive 14 est utilisée pour les traitements microprogrammés effectués par le processeur 10. Elle peut également être utilisée comme mémoire de sauvegarde lorsque le processeur est interrompu.

Le circuit logique 15 assure la sérialisation des informations à transmettre sur les bus 3, 4, 5, ainsi que le décodage et la désérialisation des informations reçues des bus 3, 4, 5. A cet effet, comme décrit en détail plus loin, le circuit logique 15 comprend des registres tampons pour le stockage intermédiaire des informations. En outre, le circuit logique 15 reçoit des signaux d'horloge provenant d'un circuit 13 de base de temps et de gestion des interruptions qui fournit également les signaux d'horloge nécessaires au fonctionnement du processeur 10. Le circuit logique 15 est relié aux bus 11D, 11A et 11C du processeur 10, ainsi qu'au bus de contrôle 24C du processeur de l'unité centrale 20, ceci afin de recevoir de l'unité centrale des micro-ordres transmis sur le bus 24C.

Le dialogue entre le coupleur 1 et le calculateur 2 est réalisé par l'intermédiaire d'une mémoire d'échange à double accès 16. Celle-ci est reliée, d'un côté, aux bus de données et d'adresses 24D, 24A du processeur 21 et, de l'autre côté, aux bus de données et d'adresses 11D, 11A du processeur 10.

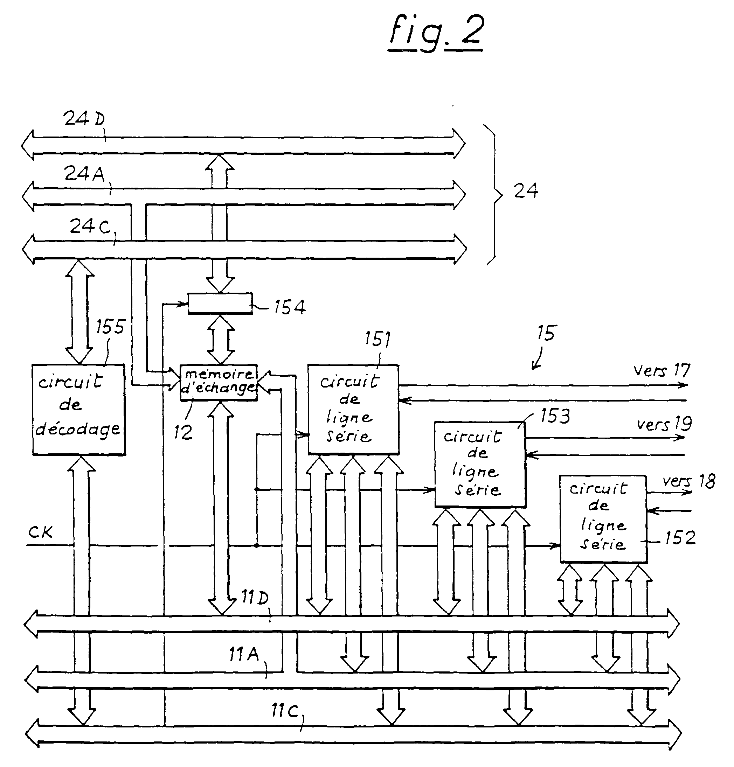

La figure 2 montre de façon plus détaillée un mode de réalisation du circuit logique 15. Celui-ci comprend essentiellement : des circuits de ligne série 151, 152, 153 interposés entre les bus 11D, 11A et 11C du processeur 10 et, respectivement, les circuits d'interface 17, 18, 19 ; un amplificateur bidirectionnel (buffer) 154 interposé entre le bus de données 24D du processeur 21 et la mémoire d'échange 12 ; et un circuit de décodage 155 interposé entre le bus de contrôle 24C du processeur 21 et le bus de contrôle 11C du processeur 10.

L'amplificateur bidirectionnel 154 est commandé par le bus de contrôle 11C.

Le circuit de décodage 155 reçoit des micro-ordres transmis sur le bus de contrôle 24C, depuis l'unité centrale 20, et les décode pour transmettre les commandes correspondantes sur le bus de contrôle 11C.

Les circuits de ligne 151, 152, 153 effectuent essentiellement la transformation parallèle/série (ou inversement), le codage/décodage et la détection des erreurs de transmission.

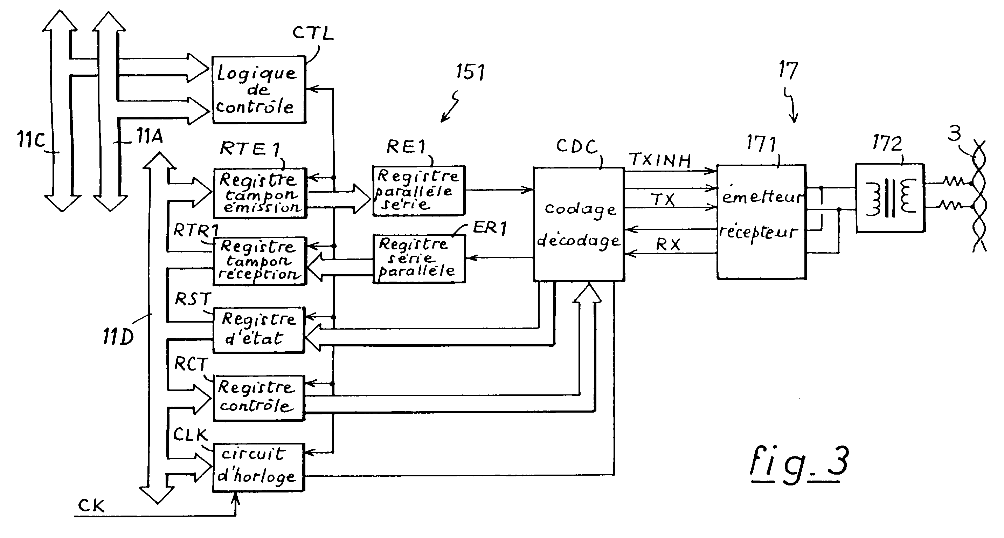

La figure 3 illustre de façon détaillée le circuit de ligne 151 associé au bus 3, celui-ci étant par exemple un bus série bifilaire de type "1553".

Le circuit 151 comprend deux registres d'émission RTE1 et RE1, deux registres de réception RR1 et RTR1, un circuit de codage/décodage CDC, un registre d'état RST, un registre de contrôle RCT, un circuit d'horloge CLK et un circuit logique de contrôle CTL.

Le registre d'émission RTE1 est un registre tampon dans lequel le stockage est commandé par le circuit CTL, et qui est interposé entre le bus de données 11D et l'entrée parallèle du registre d'émission RE1 à entrée parallèle et sortie série. Cette dernière est reliée à l'entrée de codage du circuit CDC.

Le registre de réception RTR1 est un registre tampon dans lequel le stockage est également commandé par le circuit CTL, et qui est interposé entre la sortie parallèle du registre de réception RR1 à entrée série et sortie parallèle et le bus de données 11D. L'entrée série du registre RE est reliée à la sortie de décodage du circuit CDC.

Le registre de contrôle RCT est chargé à partir du bus de données 11D, sous la commande du circuit CTL, et est lu par le circuit de codage/décodage CDC. De façon classique, le mot contenu dans le registre de contrôle est formé de bits qui, selon qu'ils sont ou non positionnés à 1, provoquent :
- l'émission d'un mot sur le bus série 3,
- la génération d'une impulsion de synchronisation caractérisant un mot de données ou un mot de commande ou d'état, pour le mot à émettre,
- l'inhibition de l'émission,
- la désactivation de la partie décodeur du circuit CDC, lorsque le bus 3 est au repos (pour éviter la prise en compte de réceptions parasites),
- la validation du circuit d'horloge.

Le registre d'état est chargé à partir du circuit de codage/décodage CDC, sous la commande du circuit CTL et son contenu est disponible sur le bus de données 11D. Egalement de façon classique, le mot contenu dans le registre d'état est formé de bits qui, selon qu'ils sont ou non positionnés à 1, indiquent :
- la nature d'un mot reçu : mot de commande ou d'état, ou mot de donnée,
- une erreur dans le mot reçu,
- l'inhibition de l'émission par le circuit de protection faisant partie du circuit de codage/décodage,
- la transmission de mots sur le bus 3,
- un dépassement de capacité en réception,
- l'absence de réponse à une commande dans un délai prédéterminé.

Le circuit de codage/décodage CDC effectue la conversion des données parallèles fournies sur le bus 11D en données série codées selon la norme du bus 3 de type "1553". Du côté codage (émission), le circuit CDC comprend un circuit de protection qui inhibe l'émission lorsqu'une transmission excède une durée prédéterminée. Du côté décodage (réception), le circuit CDC comprend un filtre destiné à éliminer les signaux parasites et un décodeur assurant la conversion des données série codées selon la norme du bus 3 en mots utilisables par le processeur 10.

Le circuit d'horloge CLK permet d'effectuer une datation des temps de réponse des abonnés connectés sur le bus 3. Il comprend un compteur incrémenté par un signal d'horloge CK provenant du circuit de base de temps 13 et un registre préchargé à partir du bus de données 11D, sous la commande du circuit CTL. Le registre est préchargé à une valeur correspondant à un temps de réponse maximum prédéterminé. Le compteur est déclenché en réponse à un signal du circuit CDC à l'émission d'un mot et stoppé en réponse à un signal du circuit CDC à la réception d'un mot. Le dépassement par le compteur de la valeur préchargée dans le registre commande une interruption vers le processeur 10.

Le circuit logique de contrôle CTL décode les mots reçus du bus de contrôle 11C et du bus d'adresses 11A pour élaborer les signaux de contrôle des registres tampons RTE1, RTR1, du registre de contôle RCT et du registre d'état RST et du circuit d'horloge CLK.

Les sorties d'émission TX et entrées de réception RX de circuit CDC, ainsi qu'une sortie TXINH d'inhibition d'émission, sont reliées au circuit d'interface 17 qui comprend un émetteur/récepteur 171 et un transformateur 172 connecté au bus bifilaire 3.

En fonctionnement, le coupleur 1 met en communication le calculateur 2 avec des abonnés connectés sur le bus 3. Les données susceptibles d'être transmises aux abonnés sont stockées dans la mémoire d'échange à double accès 16 en provenance de l'unité centrale 20.

Le coupleur 1 peut fonctionner en mode abonné sur le bus 3 ou en mode gérant du bus 3.

Au niveau du coupleur, la gestion des échanges repose sur des tables implantées en mémoire double accès 16 : un bloc de contrôle, une table des descripteurs et une file d'attente.

Le bloc de contrôle contient les paramètres de fonctionnement du coupleur (notamment fonctionnement en mode abonné ou en mode gérant) ainsi que les différents pointeurs permettant la gestion des échanges, notamment l'adresse de la table des descripteurs, l'adresse de la file d'attente, les pointeurs de gestion de la file.

Chaque message reçu du bus 3 ou transmis sur celui-ci est caractérisé par un descripteur, et l'ensemble des descripteurs est contenu dans une table. Un descripteur comprend un mot de contrôle, un mot pointeur de données et un mot de compte-rendu. Le mot de contrôle peut être constitué, du bit de poids le plus élevé au bit de poids le moins élevé :
- d'un champ d'état comprenant un bit de verrouillage indiquant qu'un échange est en cours de traitement et un bit indiquant en fin d'échange qu'un message a été reçu ou transmis,
- d'un champ définissant le format du message, et
- d'un champ relatif à la configuration de l'échange et comprenant par exemple un bit de demande d'interruption en fin d'échange, un bit de demande d'interruption en cas d'erreur et un bit de demande de compte-rendu.

Le mot de pointeur de données donne l'adresse du bloc de données en zone d'échange.

Le mot de compte-rendu indique le type d'erreur éventuelle survenue lors de la transmission. La table des descripteurs peut être partagée en deux parties : l'une affectée aux messages à transmettre (émission vers un abonné particulier ou diffusion sur le bus) et l'autre affectée aux messages reçus.

La file d'attente contient les adresses des descripteurs correspondant aux messages reçus ou émis par le coupleur (fonctionnement en mode abonné) ou aux messages à traiter par le coupleur (fonctionnement en mode gérant).

En fonctionnement en mode abonnné, l'adresse du descripteur correspondant à un message à émettre ou à stocker par le coupleur est déterminée par décodage, dans un mot de commande reçu sur le bus 3, d'un bit d'émission/réception et de bits identifiant une sous-adresse dans la table des descripteurs. Une fois l'adresse du descripteur déterminée, les informations contenues dans le mot de contrôle sont prises en compte et l'adresse de rangement des données à émettre ou recevoir est prélevée. Le bit de verrouillage du mot de contrôle indiquant qu'un échange est en cours est positionné puis l'échange est réalisé avec surveillance de la transmission en fonction des bits du champ de configuration du mot de contrôle. Le contenu de la file d'attente est mis à jour par écriture de l'adresse du descripteur et incrémentation du pointeur et la procédure d'échange est terminée par remise à l'état initial du bit de verrouillage du mot de contrôle et positionnement du bit du mot de contrôle indiquant qu'un nouveau message vient d'être émis ou reçu. Les échanges se déroulent de façon transparente pour le calculateur. Si, pour un message d'un type donné, le calculateur doit être informé à chaque échange, le bit de demande d'interruption en fin d'échange est positionné dans le mot de contrôle pour générer une interruption vers l'unité centrale du calculateur à la fin de chaque échange concerné. Sinon, il suffit de tester le bit du mot de contrôle indiquant qu'un message a été reçu ou émis pour savoir si le message a été réactualisé depuis la dernière remise à l'état initial de ce bit, cette remise à l'état initial étant effectuée par le calculateur. En outre, l'examen de la file d'attente permet de connaître à tout moment les derniers transferts réalisés.

En fonctionnement en mode gérant, les adresses des messages à traiter sont rangées directement dans la file d'attente par le calculateur. Cette file est gérée par pointeur initialisé par le calculateur. Le traitement d'un message est effectué par le coupleur sur réception par celui-ci d'une interrruption venant du calculateur. Le traitement est réalisé de façon semblable à celle indiquée plus haut, jusqu'à ce que la file d'attente soit vide. Le calculateur est alors maître des transferts effectués sur le bus 3. Dans le cas d'une émission, les données à émettre sont rangées par le calculateur dans la mémoire d'échange dans la zone pointée par le descripteur du message, puis une interruption est émise vers le coupleur.

On a envisagé ci-avant un mode de réalisation d'un circuit de ligne série 151 pour un bus 3 de type "1553".

Bien entendu, le coupleur selon l'invention est utilisable avec des bus série d'un autre type, même avec plusieurs bus ayant des types différents.

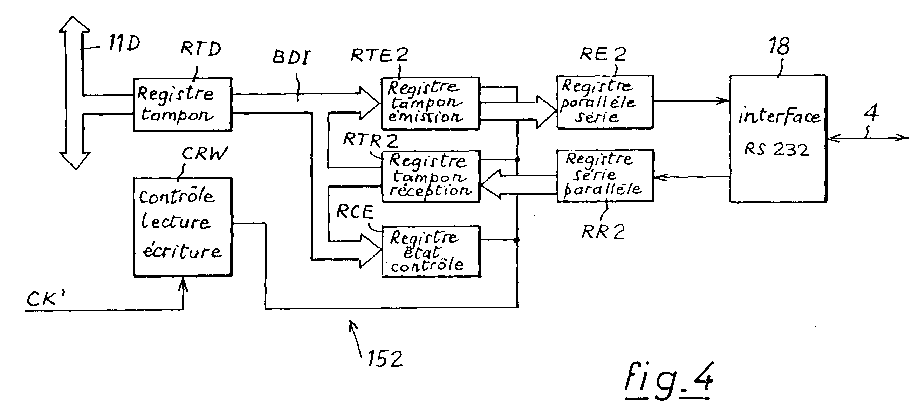

Ainsi, la figure 4 illustre un mode de réalisation d'un circuit de ligne série pour un bus série de type "RS 232", par exemple le circuit 152 associé au bus 4.

Le circuit de ligne série 152 comprend un registre tampon de données RTD interposé entre le bus de données 11D et un bus de données interne BDI. A ce dernier sont reliés un registre de contrôle et d'état RCE, un registre tampon d'émission RTE2 et un registre tampon de réception RTR2. Un registre d'émission RE2 à entrées parallèles et sortie série est inséré entre le registre tampon RTE2 et le circuit d'interface 18 tandis qu'un registre de réception RR2 à entrée série et sorties parallèles est inséré entre le circuit d'interface 18 et le registre tampon RTR2. Ces différents registres du circuit de ligne série 152 sont contrôlés par un circuit de contrôle de lecture (écriture CRW) qui est connecté aux bus de contrôle 11C et d'adresses 11A et est relié au circuit de base de temps 13 dont il reçoit un signal d'horloge CK′.

Le circuit de ligne série 152 décrit ci-avant est classique, de même que le circuit d'interface 18 par l'intermédiaire duquel il est relié au bus 42. Ce dernier pourra par exemple être constitué par les circuits référencés 26 LS 31 et 26 LS 32 par exemple des sociétés des Etats Unis d'Amérique MOTOROLA ou TEXAS INSTRUMENTS.

La transmission sur un bus série relié au coupleur 1 peut être effectuée sous forme d'une trame dans laquelle sont insérés plusieurs messages.

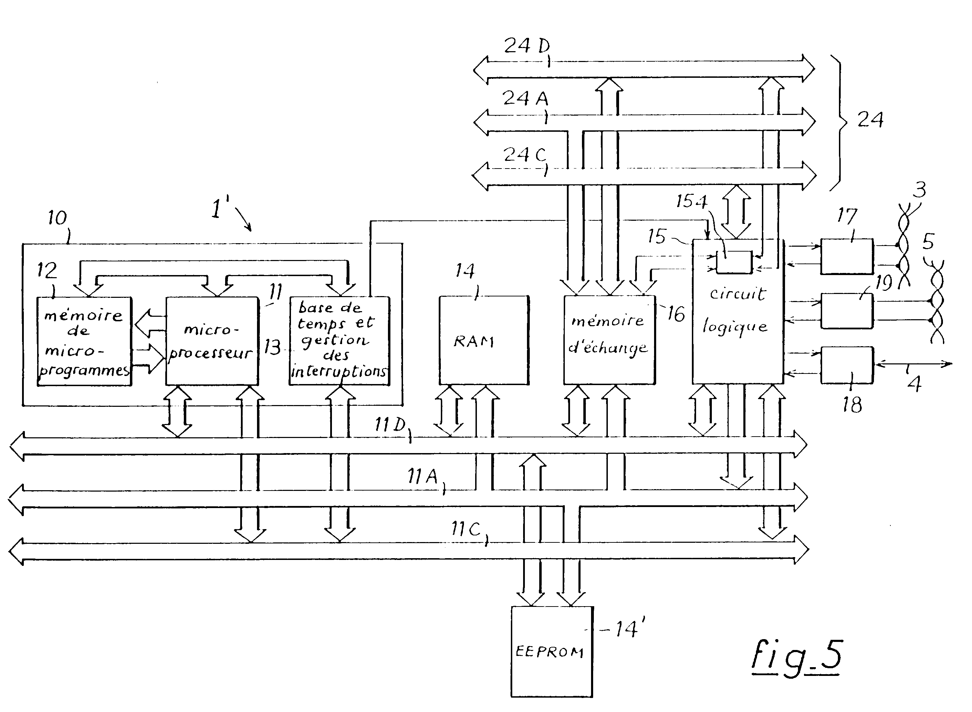

Avantageusement alors, le format de la trame est enregistré dans une mémoire non volatile. Un coupleur 1′ comprenant une telle mémoire non volatile 14′ est illustré par la figure 5. Ce coupleur 1′ se distingue de celui 1 de la figure 2 uniquement par l'adjonction de la mémoire 14′ et des connexions de celle-ci avec les autres circuits du coupleur. Les éléments communs aux coupleurs 1′ et 1 portent les mêmes références et ne seront pas à nouveau décrits.

La mémoire 14′ est par exemple une mémoire non volatile effaçable et réinscriptible électriquement (EEPROM) connectées aux bus de données 11D et d'adresses 11A du processeur 10. Le chargement de la mémoire 14′ peut être effectué par l'intermédiaire d'un bus série, par exemple le bus 3, à l'aide d'une procédure microprogrammée contenue dans la mémoire 12, de sorte que la trame peut être facilement modifiée en fonction des besoins.

## Revendications

1. Coupleur de bus série destiné à relier au moins un bus série (3,4,5) à un système de traitement d'information (2) ayant une unité centrale (20) et des bus internes (24D, 24A, 24C), ce coupleur comportant un processeur particulier (10) ayant un bus de données (11D), un bus d'adresses (11A) et un bus de contrôle (11C), un circuit de mémoire associé au processeur (10) et comprenant au moins une mémoire de programmes (12), au moins un circuit d'interface (17, 18, 19) avec un bus série (3, 4, 5) aboutissant au coupleur, et une mémoire d'échange à double accès (16) reliée d'un côté aux bus (11D, 11A, 11C) du processeur particulier (10) du coupleur et, de l'autre côté, aux bus internes (24D, 24A, 24C) du système de traitement (2), caractérisé en ce qu'il comporte en outre une mémoire non volatile (14') dans laquelle sont enregistrées des données relatives au format de trames dans lesquelles des informations sont transmises sur un bus série relié au coupleur et en ce que le circuit de mémoire comporte en outre une mémoire vive (14).

2. Coupleur selon la revendication 1, caractérisé en ce que la mémoire non volatile (14') est de type effaçable et réinscriptible.

3. Coupleur selon la revendication 1, caractérisé en ce que la mémoire vive (14) est une mémoire de sauvegarde utilisée lorsque le processeur est interrompu.

## Patentansprüche

1. Koppler für seriellen Bus, zum Verbinden wenigstens eines seriellen Busses (3, 4, 5) mit einem Informationsverarbeitungssystem (2), das eine Zentraleinheit (20) und interne Busse (24D, 24A, 24C) aufweist, wobei der Koppler aufweist: einen eigenen Prozessor (10) mit einem Datenbus (llD), einem Adreßbus (11A) und einem Steuerbus (11C), eine Speicherschaltung, die dem Prozessor (10) zugeordnet ist und wenigstens einen Programmspeicher (12) umfaßt, wenigstens eine Schnittstellenschaltung (17, 18, 19) zur Verbindung mit einem zum Koppler führenden seriellen Bus (3, 4, 5) und einen Zweitorspeicher (16), der einerseits mit den Bussen (11D, 11A, 11C) des eigenen Prozessors (10) des Kopplers und andererseits mit den internen Bussen (24D, 24A, 24C) des Verarbeitungssystems (2) verbunden ist,
dadurch gekennzeichnet, daß
er ferner einen nichtflüchtigen Speicher (14') aufweist, in dem Daten betreffend das Format der Blöcke, in denen Informationen auf einem mit dem Kuppler verbundenen seriellen Bus übertragen werden, aufgezeichnet sind, und daß die Speicherschaltung ferner einen flüchtigen Speicher (14) umfaßt.

2. Koppler nach Anspruch 1, dadurch gekennzeichnet, daß der nichtflüchtige Speicher (14') vom löschtbaren und wiederbeschreibbaren Typ ist.

3. Koppler nach Anspruch 1, dadurch gekennzeichnet, daß der flüchtige Speicher (14) ein Sicherungsspeicher ist, der benutzt wird, wenn der Prozessor unterbrochen ist.

## Claims

1. Serial bus coupler intended to link at least one serial bus (3, 4, 5) to an information processing system (2) having a central unit (20) and internal buses (24D, 24A, 24C), this coupler including a dedicated processor (10) having a data bus (11D), an address bus (11A) and a control bus (11C), a memory circuit associated with the processor (10) and comprising at least one programme memory (12), at least one circuit (17, 18, 19) for interfacing with a serial bus (3, 4, 5) arriving at the coupler, and a dual-access exchange memory (16) linked, on the one hand, to the buses (11D, 11A, 11C) of the dedicated processor (10) of the coupler and, on the other hand, to the internal buses (24D, 24A, 24C) of the processing system (2), characterized in that it further includes a non-volatile memory (14') in which data are recorded relating to the frame format in which the information is sent on a serial bus linked to the coupler and in that the memory circuit further includes a random-access memory (14).

2. Coupler according to Claim 1, characterized in that the non-volatile memory (14') is of erasable and reprogrammable type.

3. Coupler according to Claim 1, characterized in that the random-access memory (14) is a backup memory used when the processor is interrupted.
